(19) Europäisches Patentamt
European Patent Office
Office européen des brevets

(11) Veröffentlichungsnummer: **0 244 715**
**B1**

(12) # EUROPÄISCHE PATENTSCHRIFT

(45) Veröffentlichungstag der Patentschrift: **28.11.90**

(51) Int. Cl.⁵: **C08G 73/00**

(21) Anmeldenummer: **87106017.4**

(22) Anmeldetag: **24.04.87**

(54) **Verwendung von aus Polyamidcarbonsäuren hergestellten Polyimiden.**

(30) Priorität: **03.05.86 DE 3615039**

(43) Veröffentlichungstag der Anmeldung:
**11.11.87 Patentblatt 87/46**

(45) Bekanntmachung des Hinweises auf die Patenterteilung:
**28.11.90 Patentblatt 90/48**

(84) Benannte Vertragsstaaten:
**AT DE FR GB IT NL**

(56) Entgegenhaltungen:
**EP-A- 0 040 042**
**EP-A- 0 179 604**
**GB-A- 2 101 149**
**US-A- 4 535 115**

**PATENT ABSTRACTS OF JAPAN, Band 7, Nr. 273 (C-198)[1418], 6. Dezember 1983; & JP - A - 58 152 018 (HITACHI KASEI KOGYO K.K.) 09.09.1983**
**PATENT ABSTRACTS OF JAPAN, Band 8, Nr. 232 (C-248)[1669], 25. Oktober 1984; & JP - A - 59 113 035 (NITTO DENKI KOGYO K.K.) 29.06.1984**

(73) Patentinhaber: **HOECHST AKTIENGESELLSCHAFT, Postfach 80 03 20, D-6230 Frankfurt am Main 80(DE)**

(72) Erfinder: **Hupfer, Bernd, Dr., 219 Pinecrest Drive, North Kingstown Rhode Island 02852(US)**

**EP 0 244 715 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft die Verwendung von Polyamidcarbonsäuren, die als Zwischenprodukte zur Herstellung von elektrisch isolierenden hochtemperaturbeständigen Schichten aus Polyimiden verwendet werden. Die Polyimidschichten dienen insbesondere als Schutzschichten und isolierende Zwischenschichten für elektronische Bauelemente und Schaltkreise auf Halbleitern oder Metallen.

Die Verwendung von Polyimiden für hochtemperaturbeständige Schichten auf und in Halbleiterbauelementen ist z.B. aus der DE-B 1 764 977 bekannt. Die Polyimide werden durch Polykondensation von aromatischen Diaminen, z.B. 4,4'-Diaminodiphenylether, mit aromatischen Tetracarbonsäureanhydriden, z.B. Pyromellitsäuredianhydrid zu Polyamidcarbonsäuren und Erhitzen der Polyamidsäuren hergestellt, wobei sich unter Wasserabspaltung das Polyimid bildet. Diese Polyimide haben die erforderliche Temperaturbeständigkeit und die gewünschten elektrischen Eigenschaften, wenn ihr Molekulargewicht hoch genug ist. Die Lösungen der entsprechenden hochmolekularen Polyamidcarbonsäuren haben jedoch bereits bei relativ niedrigen Konzentrationen eine hohe Viskosität. Sie sind deshalb schwierig zu verarbeiten. Die hochmolekularen Polyimide selbst sind zumeist bereits relativ spröde und vermögen die von ihnen bedeckten Leiterbahnen nur unbefriedigend zu planarisieren, d.h. in eine Schicht mit ebener Oberfläche einzubetten.

Eine geringere Viskosität bei gleichem Molekulargewicht wird erreicht, wenn die Pyromellitsäure ganz oder zum Teil durch Benzophenon-3,3',4,4'-tetracarbonsäure ersetzt wird. Derartige Polyamidcarbonsäuren und daraus hergestellte Polyimide sind in der DE-B 1 520 767 beschrieben. In der Firmenschrift "Pyralin, Polyimide Coatings for Electronics", Bulletin PC-1 der E.I. du Pont de Nemours and Co., Wilmington, USA, wird auf die bessere Planarisierungswirkung dieser Polyimide hingewiesen. Die entsprechenden Polyamidcarbonsäuren neigen jedoch dazu, bereits bei tieferen Temperaturen Vernetzungsreaktionen unter Bildung unlöslicher Produkte einzugehen. Der Verarbeitungsspielraum dieser Zwischenprodukte ist deshalb eingeschränkt. Der Nachteil ist um so stärker ausgeprägt, je höher der Anteil an Benzophenontetracarbonsäureeinheiten ist; die praktisch erreichbare Viskositätserniedrigung ist deshalb begrenzt. Außerdem ist im allgemeinen die Thermostabilität von Polyimiden auf Basis von Pyromellitsäurederivaten höher als die von solchen, die aus Benzophenontetracarbonsäurederivaten hergestellt worden sind.

Auch die Diaminkomponente der Polyamidcarbonsäuren ist variiert worden, ohne daß im Zusammenhang damit besondere Eigenschaftsänderungen beschrieben werden. So werden in der US A 3 179 614 als Diaminkomponenten Phenylendiamine, Naphthylendiamine, Xylylendiamine, substituierte Benzidine, Diaminopyridine sowie Diaminodiphenylether, -diphenylsulfide, -diphenylsulfone, -diphenylmethane und -benzophenone aufgezählt. Neben den überwiegend genannten 4,4'-Isomeren der zweikernigen Verbindungen werden dort auch das 3,3'-Diaminodiphenylsulfon und das 3,4'-Diaminobiphenyl genannt. Ausführungsbeispiele sind nur für die 4,4'-Isomeren angegeben.

In der EP A 0 179 604 werden Polyamidcarbonsäuren und daraus hergestellte Polyimide beschrieben, die als Diaminkomponenten 3,3'-, 4,4'- und 3,4'-Isomere enthalten und als Pulver zur Herstellung von Klebern verwendet werden.

Aufgabe der Erfindung war es, Lösungen von Polyamidcarbonsäuren vorzuschlagen, die bei gleichem Molekulargewicht wie bekannte Verbindungen gleicher Art eine geringere Lösungsviskosität aufweisen und Polyimide mit besserer Planarisierung ergeben, ohne daß zugleich ein Verlust an Verarbeitungsspielraum eintritt.

Erfindungsgemäß werden Lösungen von Polyamidcarbonsäuren vorgeschlagen, die zum Beschichten von Halbleiterelementen verwendet werden und die zu mindestens 50 Mol.-% aus wiederkehrenden Einheiten der allgemeinen Formel I

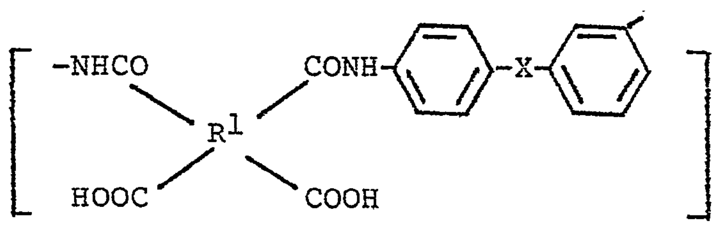

(I)

bestehen und im Mittel 2 bis 400 dieser Einheiten enthalten, worin
$R^1$ eine ein- bis vierkernige aromatische Gruppe und
X O, S, CO, $SO_2$ oder $CR^2R^3$ ist,
wobei $R^2$ und $R^3$ gleich oder verschieden sind und H oder $CH_3$ bedeuten.

Die daraus hergestellten Polyimide enthalten zu mindestens 50 Mol.-% wiederkehrende Einheiten der allgemeinen Formel V

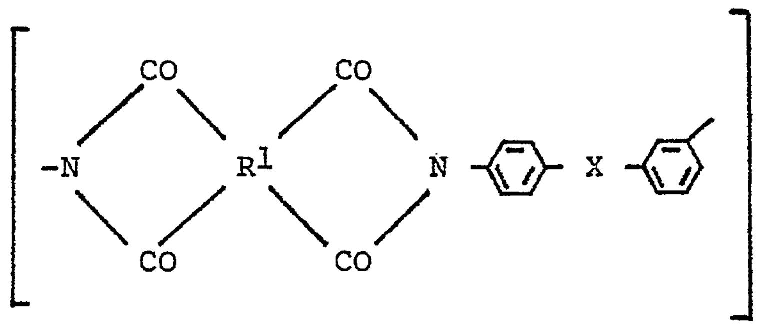

(V)

worin $R^1$ und X die oben angegebene Bedeutung haben.

Zur Herstellung der Planarisierungsschicht bringt man die Lösung der Polyamidcarbonsäure auf die zu beschichtende Oberfläche auf, trocknet die erhaltene Polyamidcarbonsäureschicht durch Erwärmen auf eine Temperatur im Bereich von 180 bis 400°C, wobei sich ein Polyimid bildet.

Die erfindungsgemäß verwendeten Polyamidcarbonsäuren enthalten im Mittel 2 bis 400, vorzugsweise 20 bis 200 Einheiten der Formel I.

Wenn $R^1$ in der Formel I mehr als einen aromatischen Kern enthält, sind diese Kerne untereinander vorzugsweise durch Einfachbindungen oder Substituenten verknüpft. $R^1$ kann insbesondere eine Phen-1,2,4,5-tetraylgruppe oder eine Gruppe der Formel II

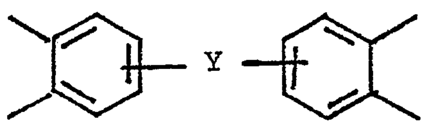

(II)

sein, worin

Y eine Einfachbindung, eine Gruppe der Bedeutung von X oder eine Gruppe der Formel III

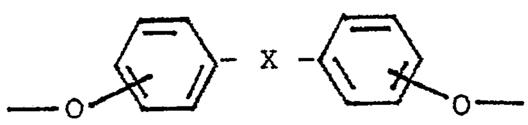

(III)

ist, wobei X die oben angegebene Bedeutung hat.

Die erfindungsgemäß verwendeten Polyamidsäuren können außer den Einheiten der Formel I andere aus Tetracarbonsäuren und Diaminen entstandene Einheiten enthalten, denen die gleichen Tetracarbonsäuren und andere Diamine zugrunde liegen, insbesondere Einheiten der Formel IV

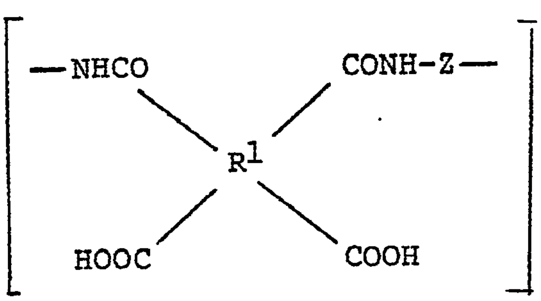

, (IV)

worin

Z eine Gruppe der Formel

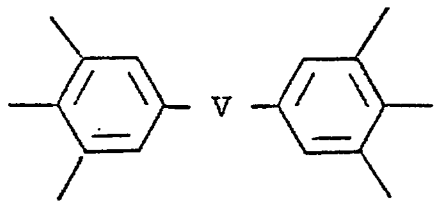
,

eine Gruppe der Formel

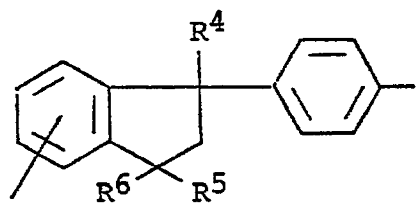
,

eine Phenylengruppe, eine Naphthylengruppe oder eine Gruppe der Formel

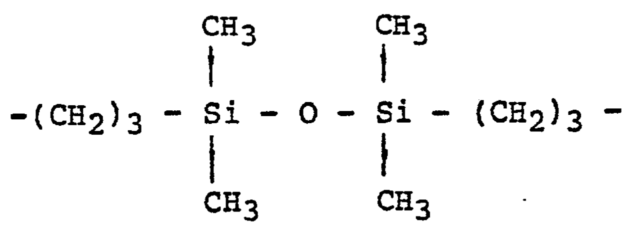

ist, wobei
$R^4$, $R^5$, $R^6$ und $R^7$ gleich oder verschieden sind und Wasserstoffatome oder Alkylgruppen mit 1 bis 3 Kohlenstoffatomen sind und
V eine Einfachbindung, eine Gruppe der Bedeutung von X
oder eine der Gruppen

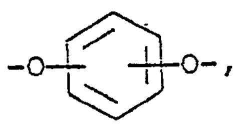
,
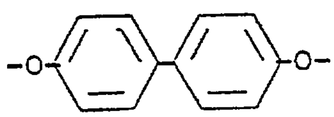
und

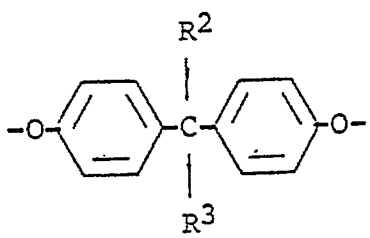

ist.

Die entsprechenden Copolymeren können bis zu 50 Mol.-%, vorzugsweise nicht mehr als 30 Mol.-% Einheiten der Formel IV enthalten. Innerhalb einer Polyamidsäure können aus unterschiedlichen Tetracarbonsäuren und unterschiedlichen Diaminen abgeleitete Einheiten vorliegen.

In den allgemeinen Formeln ist $R^1$ bevorzugt eine ein-oder zweikernige aromatische Gruppe. X ist vorzugsweise CO, $CR^2R^3$ oder O, insbesondere O.

Die erfindungsgemäß verwendeten Polyamidcarbonsäuren werden in Analogie zu bekannten Verfahren wie folgt hergestellt:

In einer Inertgasatmosphäre wird die Diaminverbindung in einem wasser- und aminfreien inerten Lösungsmittel unter Rühren gelöst.

Als inerte Lösungsmittel werden vorzugsweise solche, welche das gebildete Zwischenprodukt vom Polyamidsäuretyp auflösen, z.B. N-Methylpyrrolidon, N,N-Dimethylacetamid, N,N-Dimethylformamid,

N,N-Diethylformamid, Dimethylsulfoxid, Hexamethylphosphorsäuretriamid, Tetramethylensulfon und N-Methyl-piperidon verwendet. Man kann diese Lösungsmittel allein, Kombinationen dieser Lösungsmitel oder in Kombination mit Nichtlösern wie Benzol, Benzonitril, Dioxan, Butyrolacton, Xylol, Toluol, Cyclohexan, 2-Methoxy-ethanol, Aceton, Propylenglycolmonomethylether verwenden.

Die Lösung wird durch externes Kühlen unter 30°C gehalten, während man das Tetracarbonsäuredianhydrid zugibt. Das entstehende Gemisch wird gerührt, bis das Tetracarbonsäuredianhydrid vollständig aufgelöst ist. Hierbei nimmt die Viskosität des Reaktionssystems zu, während die Polyamidcarbonsäure gebildet wird.

Bei der Herstellung von Polyamidcarbonsäuren mit definiertem Molekulargewicht aus den Tetracarbonsäuredianhydriden und Diaminen ist es erforderlich, daß die Monomeren in höchster Reinheit vorliegen. Vorzugsweise werden sie vor der Reaktion durch Umkristallisieren, Sublimieren, Destillieren, Schmelzkristallisieren oder Zonenschmelzen gereinigt. Außerdem ist es erforderlich, daß das Tetracarbonsäuredianhydrid mit im wesentlichen äquimolaren Mengen Diamin unter weniger als ± 5 Mol.-% Abweichung eingesetzt wird. Vorzugsweise wird mit einem geringen Überschuß an Diaminverbindung von etwa 1–3 Mol.-% gearbeitet.

Die resultierenden Polyamidcarbonsäure-Lösungen besitzen Feststoffgehalte von 6–45 %, vorzugsweise 10–30% und Viskositäten von 500–10.000 mPa•s, vorzugsweise 800–7000 mPa•s. Die inhärente Viskosität der Polymeren beträgt mindestens 0,1 dl/g, vorzugsweise 0,3–1,5 dl/g. Die inhärente Viskosität ist wie folgt definiert:

$$\eta_{\text{inh.}} = \frac{\ln \dfrac{\eta_{\text{Lösung}}}{\eta_{\text{Lösungsmittel}}}}{c}$$

wobei c die Konzentration in Gramm Polymeres je 100 ml Lösung ist. Die Viskosität der erfindungsgemäßen Polymeren wird jeweils bei 25°C als 0,5%ige Lösung in N-Methylpyrrolidon bestimmt.

Die Erfindung wird im folgenden durch Ausführungsbeispiele und Vergleichsbeispiele näher erläutert.

Beispiel 1

a) In ein mit Thermometer und Rührer ausgestattetes 500 ml fassendes Reaktionsgefäß wurden unter Stickstoff 12,5 g (0,0625 mol) destillierter 3,4'-Diaminodiphenylether und 100 g N-Methylpyrrolidon gegeben und kräftig bis zur vollständigen Auflösung des Diamins gerührt. Das Reaktionsgefäß war mit einem Kühlmantel versehen, durch den Wasser zirkulierte. Zu dieser Lösung wurden 13,4 g (0,0614 mol) umkristallisiertes Pyromellitsäuredianhydrid in groben Stücken auf einmal zugegeben. Man spülte mit 133g N-Methylpyrrolidon nach und rührte, bis das Tetracarbonsäureanhydrid vollständig aufgelöst war. Bei der hierbei ablaufenden Reaktion wurde eine Lösung erhalten, welche 10 Gew.-% Polyamidsäure enthielt. Die Viskosität der Lösung betrug 194 mPa•s bei 25°C, die inhärente Viskosität wurde zu 0,78 dl/g errechnet.

b) Eine nach der unter (a) beschriebenen Vorgehensweise aus 12,5 g 3,4'-Diaminodiphenylether und 13,4 g Pyromellitsäuredianhydrid hergestellte Polyamidsäure-Lösung, die 17 % Harz enthielt, wies eine Viskosität von 2420 mPa•s bei 25°C und eine inhärente Viskosität von 0,79 dl/g auf.

c) (Vergleich)

Eine nach der unter (a) beschriebenen Vorgehensweise aus 12,5 g 4,4'-Diaminodiphenylether und 13,4 g Pyromellitsäuredianhydrid hergestellte Lösung, die 10% Polyamidsäure enthielt, wies eine Viskosität von 2150 mPa•s bei 25°C und eine inhärente Viskosität von 1,33 dl/g auf.

Beispiel 2

a) Nach der im Beispiel 1 (a) beschriebenen Vorgehensweise wurden 12,5 g (0,0625 mol) 3,4'-Diaminodiphenylether mit 19,8 g (0,0614 mol) 3,3',4,4'-Benzophenontetracarbonsäuredianhydrid in 291 g N-Methylpyrrolidon umgesetzt. Die resultierende Lösung, welche 10% Polyamidsäure enthielt, wies eine Viskosität von 98 mPa•s bei 25°C und eine inhärente Viskosität von 0,64 dl/g auf.

b) Eine nach der im Beispiel 1 (a) beschriebenen Vorgehensweise aus 12,5 g 3,4'-Diaminodiphenylether und 19,8 g 3,3',4,4'-Benzophenontetracarbonsäuredianhydrid hergestellte 17%ige Polyamidsäurelösung wies eine Viskosität von 376 mPa•s bei 25° C und eine inhärente Viskosität von 0,63 dl/g auf.

c) (Vergleich)

Nach der im Beispiel 1 (a) beschriebenen Vorgehensweise wurden 12,5 g 4,4'-Diaminodiphenylether mit 19,8 g 3,3',4,4'-Benzophenontetracarbonsäuredianhydrid in 291 g N-Methylpyrrolidon umgesetzt. Die

resultierende Lösung, welche 10% Polyamidsäure enthielt, wies eine Viskosität von 376 mPa•s bei 25°C und eine inhärente Viskosität von 0,95 dl/g auf.

Beispiel 3

Nach der im Beispiel 1 (a) beschriebenen Vorgehensweise wurde ein Gemisch aus 75 g (0,0375 mol) 4,4'-Diaminodiphenylether und 17,5 g (0,0875 mol) 3,4'-Diaminodiphenylether mit 26,9 g (0,123 mol) Pyromellitsäuredianhydrid in 468 g N-Methylpyrrolidon umgesetzt. Die resultierende Lösung, welche 10% Polyamidsäure enthielt, wies eine Viskosität von 480 mPa•s bei 25°C und eine inhärente Viskosität von 0,98 dl/g auf.

Beispiel 4

a) Der im Beispiel 1 (a) erhaltene Lack wurde auf eine Glasplatte gegossen und diese damit beschichtet. Die beschichtete Platte wurde 2 Stunden auf 100°C erwärmt, wobei ein Film mit einer Dicke von 40 bis 50 µm gebildet wurde. Der Film wurde weiter 1 Stunde auf 220°C und dann 1 Stunde auf 350°C erwärmt.
Mit Hilfe einer differentiellen Thermowaage wurde die Temperatur, bei welcher Gewichtsverlust einsetzte, zu 450° C bestimmt. Die Gewichtsverlustrate wurde im Luftstrom bei 455°C zu 18,4%/h bestimmt.
b) Es wurde ein Film auf die gleiche Weise wie unter (a) beschrieben hergestellt, wobei der im Vergleichsbeispiel 1 (c) erhaltene Lack verwendet wurde. Die Temperatur, bei der der Gewichtsverlust einsetzte, wurde zu 450°C bestimmt. Die Gewichtsverlustrate wurde im Luftstrom bei 458°C zu 16,4%/h bestimmt. Das Ergebnis zeigt, daß die erfindungsgemäßen Polymeren praktisch die gleiche Temperaturbeständigkeit aufweisen wie die bekannten isomeren Verbindungen.

Beispiel 5

a) Ein Transistor, der mit einer Aluminiumelektrode ausgestattet war, wurde mit dem in Beispiel 1 (a) erhaltenen Lack beschichtet. Daraufhin wurde der Transistor 1 Stunde lang auf 100°C und eine weitere Stunde auf 220°C erwärmt. Der unmittelbar über der Aluminiumelektrode gelegene Teil wurde nach Maskierung mit Fotoresist mit Hydrazin geätzt und dann 1 Stunde lang auf 350°C erwärmt. Darauf wurde Aluminium niedergeschlagen, wodurch sich eine doppelschichtige Struktur ergab. Das Stromverstärkungsverhältnis [Änderung der $h_{FE}$-Linearität = (hFE-Linearität nach Behandlung bei 520°C) – ($h_{FE}$-Linearität vor der Wärmebehandlung)] des auf diese Weise erhaltenen Transistors betrug + 0,3%.

b) (Vergleich)
Es wurde ein Transistor mit einer Doppelschichtstruktur auf die gleiche Weise wie unter (a) hergestellt, wobei der gemäß Beispiel 1 (c) (Vergleich) erhaltene Lack verwendet wurde. Das Stromverstärkungsverhältnis des Transistors betrug + 0,3 %.

Wie aus den Ergebnissen von Beispiel 5 hervorgeht, hat es keinerlei Einfluß auf die elektrischen Eigenschaften eines Transistors, ob er mit herkömmlichen, von 4,4'-Diaminodiphenylether abgeleiteten Polyimiden oder mit den erfindungsgemäßen von 3,4'-Diaminodiphenylether abgeleiteten Polyimiden beschichtet ist.

Beispiel 6

a) 0,9 µm hohe und 3 µm breite Siliciumdioxid-Stege, die sich in einem Abstand von 7 µm auf einem Silicium-Wafer befanden, wurden bei 5000 U/min mit einer Schicht des Lackes aus Beispiel 1 (b) beschichtet. Daraufhin wurde der Lack eine Stunde auf 250°C und eine Stunde auf 350°C erwärmt. Der Planarisierungsgrad (s. L.B. Rothman, J. Electrochem. Soc. 127, 2216–20 (1980)) betrug 50%.

b) (Vergleich)
Ein Wafer mit Siliciumdioxid-Stegen wie unter (a) wurde bei 5000 U/min mit einer Schicht des Lacks aus Beispiel 1 (c) beschichtet. Nach der Wärmebehandlung betrug der Planarisierungsgrad 29%.

Wie der vorangehenden Beschreibung zu entnehmen ist, sind Lösungen von Zwischenprodukten vom Polyamidsäuretyp mit verarbeitungstechnisch günstigeren Eigenschaften (erniedrigte Viskosität bei höherem Feststoffgehalt) durch Ersatz des üblicherweise verwendeten 4,4'-Diaminodiphenylethers durch 3,4'-Diaminodiphenylether zugänglich. Die neuen Zwischenprodukte vom Polyamidsäuretyp weisen unverändert gute elektrische und thermische Eigenschaften sowie wesentlich bessere Planarisierungseigenschaften auf.

Beispiel 7

Die Oberfläche eines Silicium-Wafers, die mit einer ersten Netzschicht von Aluminium-Leiterbahnen bedeckt war, wurde durch Schleuderbeschichtung mit der nach Beispiel 1 (a) erhaltenen Polyamidcarbonsäurelösung beschichtet. Die Lösung wurde getrocknet und 1 Stunde auf 130°C erwärmt. Auf die noch ungehärtete Polyamidsäureschicht wurde eine handelsübliche Positiv-Photoresistlösung auf Basis von Naphthochinondiaziden und Novolaken aufgebracht, getrocknet, belichtet und mit einer handelsüblichen wäßrig-alkalischen Entwicklerlösung entwickelt. Dabei wurde an den belichteten Stellen sowohl die Photoresistschicht als auch die darunterliegende Polyamidsäureschicht entfernt und die Oberfläche der Aluminiumschicht freigelegt. Die Photoresistschablone wurde dann mit Aceton entfernt, und die Polyamidcarbonsäureschicht 1 Stunde bei 350°C gehärtet.

Die erhaltene Polyimidschablone bedeckte die Aluminium-Leiterbahnen und ließ nur die gewünschten Kontaktstellen frei. Auf dieser gesamten Oberfläche wurde eine zweite Aluminiumschicht niedergeschlagen und in üblicher Weise photolithographisch zu einer Leiterbahnenschicht strukturiert.

Beispiel 8

Dieses Beispiel zeigt die erfindungsgemäße Verwendung eines Polyimids als Schutzschicht auf der Oberfläche eines Transistors, die das Eindringen von Verunreinigungen verhindert.

Ein auf einem Siliciumwafer in bekannter Weise erzeugter Transistor mit seitlich angeordneten Kontakten wurde mit einer Polyamidcarbonsäureschicht gemäß Beispiel 2 (b) überzogen. Die Schicht wurde getrocknet, 1 Stunde auf 100°C und eine weitere Stunde auf 220°C erhitzt. Auf die so erhaltene Polyimidschicht wurde eine handelsübliche negativ arbeitende Photoresistlösung aufgeschleudert und getrocknet. Die Schicht wurde unter einer Vorlage belichtet, bei der nur die Kontaktstellen abgedeckt waren. Durch die Entwicklung wurde an diesen Stellen die im Entwickler unlösliche Polyimidschicht freigelegt, die dann mit Hydrazin geätzt wurde. Die Photoresistschablone wurde entfernt und die Polyimidschicht 1 Stunde bei 350°C ausgehärtet. Es wurde ein Transistor erhalten, dessen Oberfläche bis auf die Kontaktstellen durch die Polyimidschicht geschützt war.

**Patentansprüche**

1. Verwendung einer Lösung von Polyamidcarbonsäuren zum Beschichten von Halbleiterbauelementen, dadurch gekennzeichnet, daß die Polyamidcarbonsäuren zu mindestens 50 Mol.-% aus wiederkehrenden Einheiten der allgemeinen Formel I

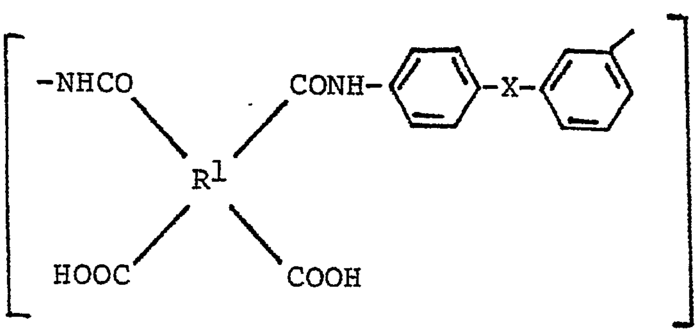

(I)

bestehen und im Mittel 2 bis 400 dieser Einheiten enthalten, worin
$R^1$ eine ein- bis vierkernige aromatische Gruppe und
X O, S, CO, $SO_2$ oder $CR^2R^3$ ist,
wobei $R^2$ und $R^3$ gleich oder verschieden sind und H oder $CH_3$ bedeuten.

2. Verwendung nach Anspruch 1, dadurch gekennzeichnet, daß
$R^1$ eine Phen-1, 2, 4, 5-tetraylgruppe oder eine Gruppe der Formel II

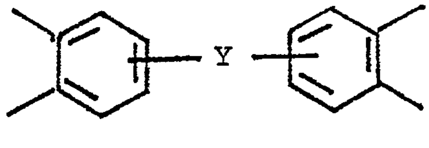

(II)

ist, worin
Y eine Einfachbindung, eine Gruppe der Bedeutung von X oder eine Gruppe der Formel III

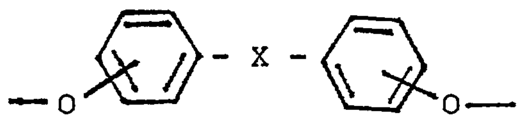 (III)

ist, wobei X die in Anspruch 1 angegebene Bedeutung hat.

3. Verwendung nach den Ansprüchen 1 oder 2, dadurch gekennzeichnet, daß die Polyamidcarbonsäuren ferner Einheiten der Formel IV

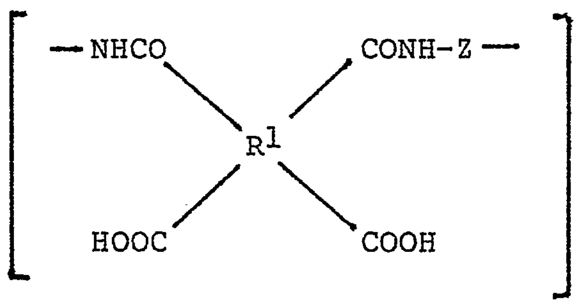 (IV)

enthalten, worin
Z eine Gruppe der Formel

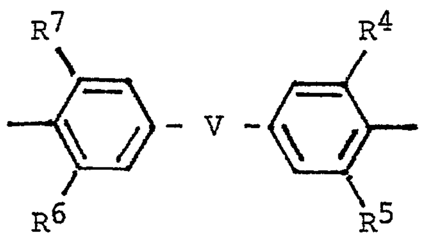 ,

eine Gruppe der Formel

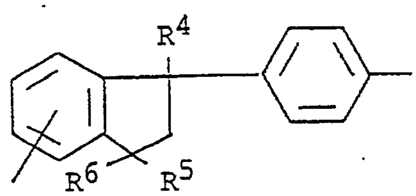 ,

eine Phenylengruppe, eine Naphthylengruppe oder eine Gruppe der Formel

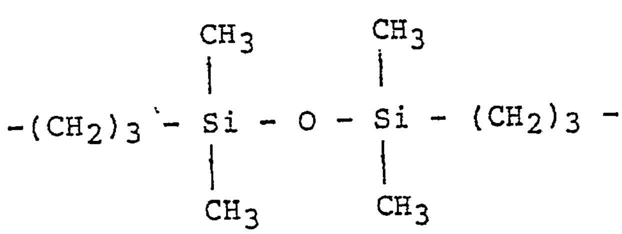

ist, wobei
$R^4$, $R^5$, $R^6$ und $R^7$ gleich oder verschieden sind und Wasserstoffatome oder Alkylgruppen mit 1 bis 3 Kohlenstoffatomen sind und
V eine Einfachbindung, eine Gruppe der Bedeutung von X
oder eine der Gruppen

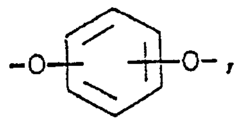, 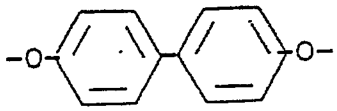 und

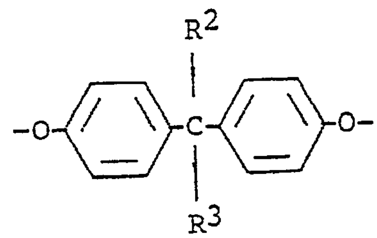

ist.

4. Verwendung nach einem der Ansprüche 1 bis 3, dadurch gekennzeichnet, daß als Lösemittel wasser- und aminfreie Lösemittel eingesetzt werden.

5. Verwendung nach einem der Ansprüche 1 bis 4, dadurch gekennzeichnet, daß als Lösemittel eine Verbindung oder ein Gemisch von N-Methylpyrrolidon, N,N-Dimethylacetamid, N,N-Dimethylformamid, N,N-Diethylformamid, Dimethylsulfoxid, Hexamethylphosphorsäuretriamid, Tetramethylensulfon oder N-Methyl-piperidon eingesetzt wird.

6. Verwendung nach einem der Ansprüche 1 bis 5, dadurch gekennzeichnet, daß als Lösemittel ein Lösemittelgemisch aus einem oder mehreren Lösemitteln aus Anspruch 5 in Kombination mit einem Nichtlöser eingesetzt wird.

7. Verwendung Anspruch 6, dadurch gekennzeichnet, daß das Lösemittelgemisch als Nichtlöser Verbindungen wie Benzol, Benzonitril, Dioxan, Butyrolacton, Xylol, Toluol, Cyclohexan, 2-Methoxy-ethanol, Aceton oder Propylenglycolmonomethylether enthält.

8. Verwendung nach einem der Ansprüche 1 bis 7, dadurch gekennzeichnet, daß die Lösung einen Feststoffgehalt von 6 bis 45 Gew.-%, vorzugsweise 10 bis 30 Gew.-%, aufweist

9. Verwendung nach einem der Ansprüche 1 bis 8, dadurch gekennzeichnet, daß die Lösung eine Viskosität von 500 bis 10.000 mPa · s, vorzugsweise 800 bis 7000 mPa · s, aufweist.

10. Verwendung nach einem der Ansprüche 1 bis 9, dadurch gekennzeichnet, daß das die Lösung enthaltende Polymere eine inhärente Viskosität von mindestens 0,1 dl/g, vorzugsweise 0,3 bis 1,5 dl/g, aufweist.

**Claims**

1. Use of a solution of polyamide-carboxylic acids for semiconductor components, wherein the polyamide-carboxylic acids comprise at least 50 mole-% of recurrent units of the general formula I

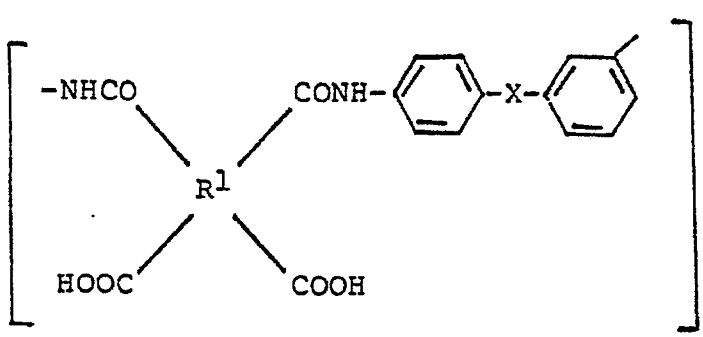

(I)

and contain, on an average, 2 to 400 of these units, wherein
$R^1$ is a mono to tetranuclear aromatic group and
X is O,S, CO, $SO_2$ or $CR^2R^3$,
$R^2$ and $R^3$ being identical or different and denoting H or $CH_3$.

2. Use as claimed in claim 1, wherein
$R^1$ is a phen-1,2,4,5-tetrayl group or a group of the formula II

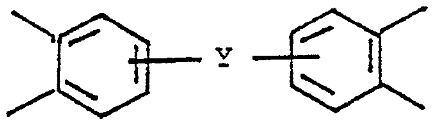 (II)

wherein
Y is a single bond, a group having the signification of X or a group of the formula III

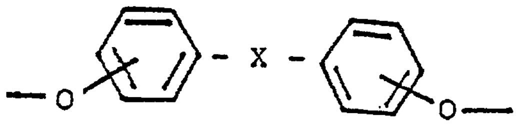 (III)

X having the signification indicated in claim 1.

3. Use as claimed in claim 1 or 2, wherein the polyamide carbocyclic acids additionally contain units of the formula IV

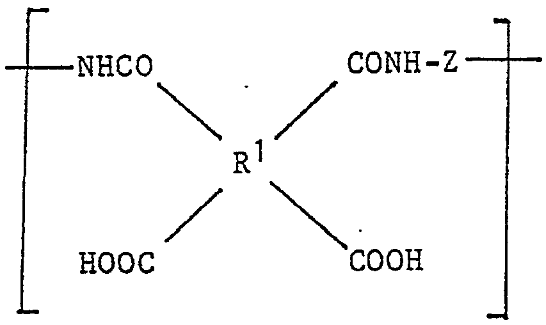 , (IV)

wherein
Z is a group of the formula

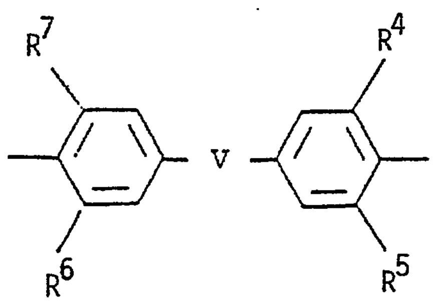 ,

a group of the formula

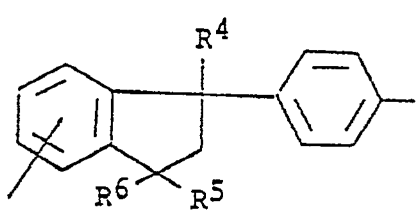 ,

a phenylene group, a naphthylene group or a group of the formula

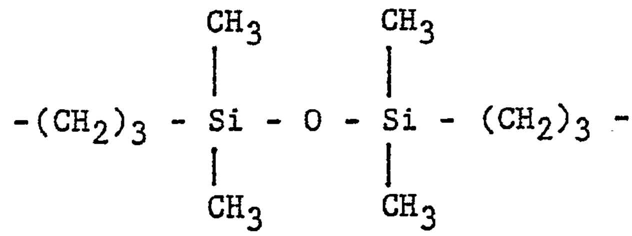

$R^4$, $R^5$, $R^6$ and $R^7$ being identical or different and denoting hydrogen atoms or alkyl groups having from 1 to 3 carbon atoms and
V being a single bond, a group having the signification of X or one of the groups

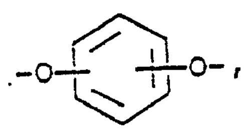,
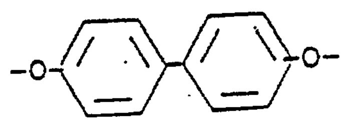 and

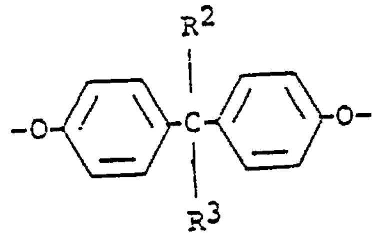

4. Use as claimed in any of claims 1 to 3, wherein the solvents used are free of water and amines.

5. Use as claimed in any of claims 1 to 4, wherein the solvent used comprises N-methylpyrrolidone, N,N-dimethylacetamide, N,N-dimethylformamide, N,N-dimethylformamide, dimethylsulfoxide, hexamethylphosphoric acid triamide, tetramethylensulfone and N-methylpiperidone or a mixture of these.

6. Use as claimed in any of claims 1 to 5, wherein the solvent used comprises a solvent mixture of one or more of the solvents of claims 5 in combination with a non-solvent.

7. Use as claimed in claim 6, wherein the solvent mixture contains as non-solvents compounds such as benzene, benzonitrile, dioxane, butyrolactone, xylene, toluene, cyclohexane, 2-methoxy-ethanol, acetone or propylene glycol monomethylether.

8. Use as claimed in any of claims 1 to 7, wherein the solution has a solids content of 6 to 45% by weight, preferably of 10 to 30% by weight.

9. Use as claimed in any of claims 1 to 8, wherein the solution has a viscosity of 500 to 10,000 mPs · s, preferably of 800 to 7,000 mPs · s.

10. Use as claimed in any of claims 1 to 9, wherein the polymer contained in the solution has an inherent viscosity of at least 0.1 dl/g, preferably of 0.3 to 1.5 dl/g.

**Revendications**

1. Utilisation d'une solution de poly(amide-acide carboxylique)s pour le revêtement de composants à semiconducteurs, caractérisée en ce que les poly(amide-acide carboxylique)s sont constitués à raison d'au moins 50% en mole de motifs répétitifs de formule générale I

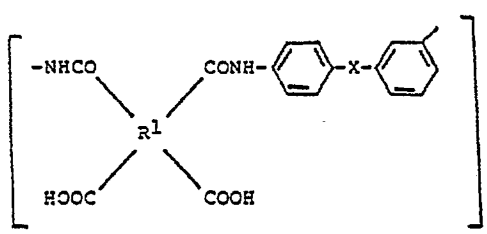

(I)

et contiennent en moyenne de 2 à 400 de ces motifs, dans lesquels
$R^1$ est un groupe aromatique mono- à tétracyclique, et
X est O, S, CO, $SO_2$ ou $CR_2R_3$,

$R^2$ et $R^3$ étant identiques ou différents et représentant H ou $CH_3$.

2. Utilisation selon la revendication 1, caractérisée en ce que R est un groupe phén-1,2,4,5-tétrayle ou un groupe de formule II

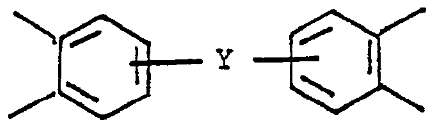

(II)

dans laquelle Y est une simple liaison, un groupe ayant la signification de X ou un groupe de formule (III)

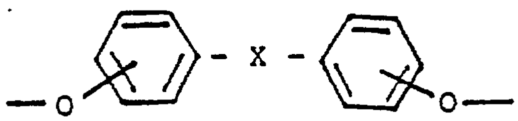

(III)

X ayant la signification donnée dans la revendication 1.

3. Utilisation selon la revendication 1 ou 2, caractérisée en ce que les poly(amide-acide carboxylique)s contiennent en outre des motifs de formule IV

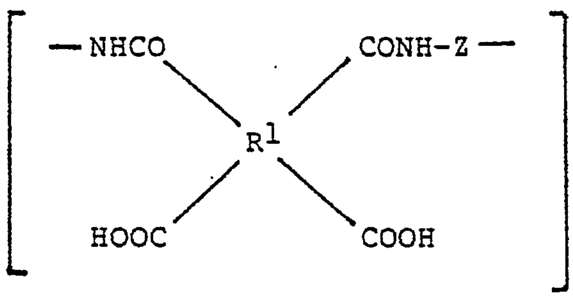

(IV)

dans laquelle
Z est un groupe de formule

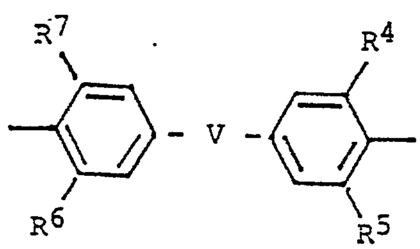

,

un groupe de formule

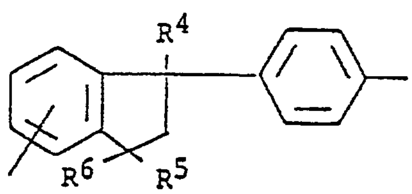

,

un groupe phénylène, un groupe naphtylène ou un groupe de formule

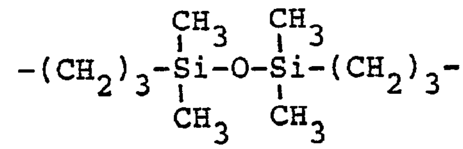

$R^4$, $R^5$, $R^6$ et $R^7$ étant identiques ou différents et représentant des atomes d'hydrogène ou des groupes alkyle ayant de 1 à 3 atomes de carbone et
V étant une simple liaison ou un groupe ayant la signification de X, ou l'un des groupes

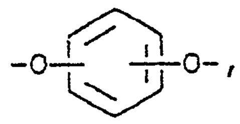 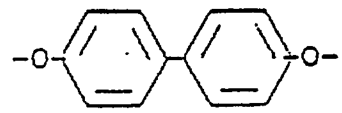 et

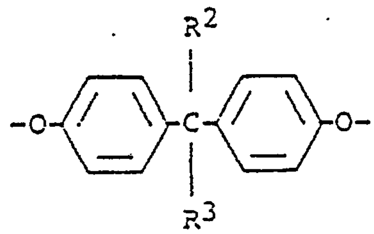

4. Utilisation selon l'une des revendications 1 à 3, caractérisée en ce que l'on utilise en tant que solvants des solvants anhydres et exempts d'amines.
5. Utilisation selon l'une des revendications 1 à 4, caractérisée en ce que l'on utilise en tant que solvants la N-méthylpyrrolidone, le N,N-diméthylacétamide, le N,N-diméthylformamide, le N,N-diéthylformamide, le diméthylsulfoxyde, l'hexaméthylphosphotriamide, la tétraméthylènesulfone, la N-méthylpipéridone ou un mélange de ceux-ci.
6. Utilisation selon l'une des revendications 1 à 5, caractérisée en ce que l'on utilise en tant que solvants un mélange de solvants à base d'un ou plusieurs solvants de la revendication 5 en association avec un non-solvant.
7. Utilisation selon la revendication 6, caractérisée en ce que le mélange de solvants contient en tant que non-solvants des composés tels que le benzène, le benzonitrile, le dioxanne, la butyrolactone, le sylène, le toluène, le cyclohexane, le 2-méthoxy-éthanol, l'acétone ou l'éther monométhylique de propylèneglycol.
8. Utilisation selon l'une des revendications 1 à 7, caractérisée en ce que la solution présente une teneur en matière sèche de 6 à 45% en poids, de préférence de 10 à 30% en poids.
9. Utilisation selon l'une des revendications 1 à 8, caractérisée en ce que la solution présente une viscosité de 500 à 10 000 mPa · s, de préférence de 800 à 7000 mPa · s.
10. Utilisation selon l'une des revendications 1 à 9, caractérisée en ce que le polymère contenu dans la solution présente une viscosité inhérente d'au moins 0,1 dl/g, de préférence de 0,3 à 1,5 dl/g.